# EUROPÄISCHE PATENTSCHRIFT

(11) **EP 0 844 716 B1**
(45) Veröffentlichungstag und Bekanntmachung des Hinweises auf die Patenterteilung: **17.05.2000**
(21) Anmeldenummer: 97118453.6
(22) Anmeldetag: 23.10.1997
(51) Int. Cl.: H02G 15/013, H02G 15/076

(54) **Kabelmuffe**
Cable sleeve
Manchon de câble

(30) Priorität: 21.11.1996 DE 19648291
(43) Veröffentlichungstag der Anmeldung: 27.05.1998
(73) Patentinhaber: RXS Kabelgarnituren Gesellschaft mit beschränkter Haftung, 58093 Hagen (DE)
(72) Erfinder: Zimmer, Rainer, 58579 Schalksmühle (DE); Fröhlich, Franz-Friedrich, 58091 Hagen (DE)
(74) Vertreter: Zedlitz, Peter, Dipl.-Inf.

(56) Entgegenhaltungen:
- EP-A- 0 236 141
- DE-A- 2 131 830
- DE-A- 4 035 557
- FR-A- 2 158 526

## Beschreibung

Die Erfindung betrifft eine Kabelmuffe aus einem Umhüllungskörper und mindestens einem an sich bekannten Dichtungskörper mit umlaufender Dichtungsnut und einer ringförmigen Dichtung, wobei der Umhüllungskörper am Dichtungsende einen nach auswärts gerichteten umlaufenden und konisch abgeschrägten Flansch aufweist, der zusammen mit der Dichtung von einem Spannring, der eine einwärts gerichtete Nut mit konischen Flanken aufweist, umfaßt wird.

Aus der DE 40 35 557 - A1 ist eine Haubenmuffe bekannt, die aus einem rohrförmigen Umhüllungskörper und mindestens an einem Ende aus einem an sich bekannten scheibenförmigen Dichtungskörper mit Kabeleinführungsdichtungen besteht. Der Dichtungskörper wird mit einem Adapter versehen, der in die Dichtungsnut des Dichtungskörperseinerseits eingeführt wird und andererseits gegen einen konisch abstehenden Flansch des Umhüllungskörpers mit Hilfe eines Spannringes dichtend gepreßt wird, wobei zusätzlich ein Dichtungsring eingelegt werden müß. Hier sind also mehrere Einzelteile zum Dichtungssystem zusammenzufassen.

Die Aufgabe vorliegender Erfindung liegt darin, eine Kabelmuffe mit einem Dichtungssystem zwischen einem Dichtungskörper bekannter Art und dem Flansch eines Umhüllungskörpers zu schaffen, die im Dichtungsbereich aus möglichst wenig Einzelteilen besteht und deshalb besonders montagefreundlich und funktionssicher ist. Die gestellte Aufgabe wird mit einer Kabelmuffe der eingangs erläuterten Art dadurch gelöst, daß die ringförmige Dichtung aus einer die Dichtungsnut des Dichtungskörpers ausfüllenden Nutdichtung und einer in die Nut des Spannringes eintauchenden und der Flanke des Flansches des Umhüllungskörpers angepaßten Flanschdichtung besteht, daß zwischen der Nutdichtung und der Flanschdichtung mindestens ein umlaufender Stützring ausgebildet ist und daß die ringförmige Dichtung aus einem Elastomer mit einer Shore-Härte von 40° bis 70° besteht.

Der besondere Vorteil im Dichtungssystem der Kabelmuffe gemäß der Erfindung besteht in erster Linie darin, daß die ringförmige Dichtung so gestaltet und trotz ihrer Elastizität so formfest ist, daß sie im Dichtungssystem den nötigen mechanischen Halt wie auch die Dichtfunktion zwischen dem Dichtungskörper und dem Flansch des Umhüllungskörpers übernehmen kann. Diese ringförmige Dichtung setzt sich als ein einziger Formkörper aus einer Nutdichtung und einer Flanschdichtung zusammen, wobei die Nutdichtung in die umlaufende Dichtungsnut des Dichtungskörpers eintaucht und die Flanschdichtung mit ihrer Dichtungsfläche dem Flansch des Umhüllungskörpers angepaßt und zugewandt ist. Die Flanschdichtung der ringförmigen Dichtung und der Flansch des Umhüllungskörpers werden in einer konischen Nut des umlaufenden Spannringes zusammengeführt und durch Spannen desselben dichtend gegeneinander gepreßt. Außerdem wird bei diesem Schließvorgang die ringförmige Dichtung insgesamt in die umlaufende Dichtungsnut des Dichtungskörpers dichtend eingepreßt. Die ringförmige Dichtung besteht aus einem Elastomer, der eine shore-Härte von 40° bis 70° aufweist, so daß die erforderliche mechanische Formstabilität gegeben ist. Aus diesem Grunde sind keine weiteren Bauelemente zur Stabilisierung des Dichtungssystems nötig, wie dies beim Stand der Technik zu sehen ist.

Die Erfindung wird nun anhand von acht Figuren näher erläutert.
- Figur 1: zeigt den Stand der Technik.
- Figur 2: zeigt eine erste ringförmige Dichtung gemäß der Erfindung im Querschnitt.
- Figur 3: zeigt den Einsatz der Dichtung nach Figur 2 im Dichtungskörper.
- Figur 4: verdeutlicht den Dichtungsbereich der Kabelmuffe.
- Figur 5: zeigt ein Ausführungsbeispiel nach Figur 2 mit zusätzlicher Dichtlippe.
- Figur 6: zeigt ein zweites Ausführungsbeispiel einer ringförmigen Dichtung.
- Figur 7: zeigt die Dichtung nach Figur 6 im Dichtungskörper.
- Figur 8: zeigt die montierte Dichtung nach Figur 6 im Dichtungsbereich.

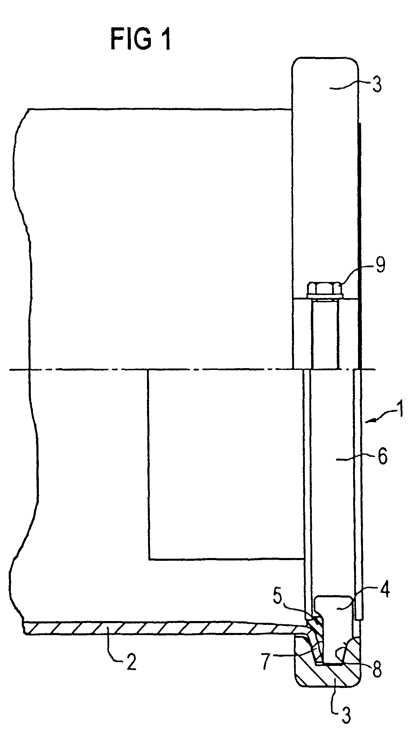

In Figur 1 ist eine bekannte Kabelmuffe im stirnseitigen Dichtungsbereich dargestellt, wobei der Dichtungskörper 1 am Ende des Umhüllungskörpers 2 gegen einen Flansch 7 mit Hilfe eines Spannringes 3 dicht angepreßt wird. Der an sich bekannte Dichtungskörper 1 besitzt eine umlaufende Dichtungsnut 6, in der ein entsprechender Adapter 4 eingesetzt werden muß, um das ursprüngliche radial wirkende Dichtungssystem auf das erforderliche axiale Dichtungssystem umsetzen zu können. Zwischen diesem Adapter 4 und dem Flansch 7 ist ein Dichtungsring 5 eingelegt, durch den dann die Dichtung gewährleistet wird. Der nötige Anpreßdruck hierfür wird durch Schließen des Spannringes 3 mit Hilfe eines Schließmechanismus 9 erreicht, wobei die Anpressung durch die keilförmige Nut 8 innerhalb des Spannringes 3 erfolgt. Bei diesem Stand der Technik sind somit mehrere Einzelteile nötig, die sorgfältig ineinander gefügt werden müssen, um die Abdichtung herstellen zu können.

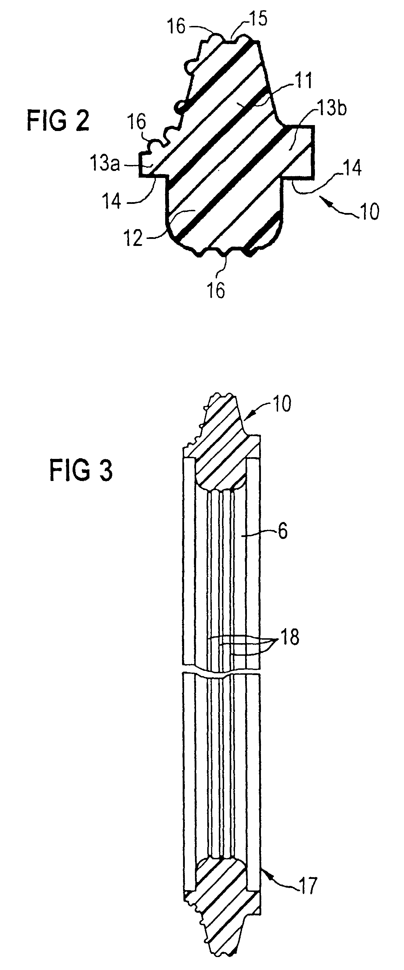

Figur 2 verdeutlicht nun im Querschnitt eine ringförmige Dichtung 10, mit der gemäß der Erfindung aufgrund ihrer Formgebung und ihrer Eigenstabilität die erforderliche Abdichtung im Verschlußbereich zwischen dem an sich bekannten Dichtungskörper und dem Flansch eines Umhüllungskörpers vorgenommen werden kann. Dabei ist wichtig, daß die ringförmige Dichtung 10 aus einem Material besteht, das Eigenschaften aufweist, die sowohl den Dichtungsforderungen als auch den Stabilitätsbedingungen genügt. So wird als Material für die Dichtung ein Elastomer, zum Beispiel Silikon, verwendet, der eine Shore-Härte von 40° bis 70°, Vorzugsweise 50° bis 70° aufweist. Der Querschnitt zeigt die einstückige Dichtung 10, in der mehrere Funktionsteile enthalten sind. So dient der innere Teil der ringförmigen Dichtung 10 als Nutdichtung 12, die in die umlaufende Dichtungsnut des Dichtungsskörpers eingesenkt wird. Daran schließen sich zwei umlaufende Stützringe 13a und 13b an, auf deren einwärts gerichteten Flächen 14 die gesamte Dichtung 10 auf den Rändern der Dichtungsnut des Dichtungskörpers aufgestützt ist. Dann erhebt sich von hier aus die angepaßte Flanschdichtung 11, deren eine Dichtungsfläche der konisch verlaufenden Form des Flansches des Umhüllungskörpers angepaßt ist. Das obere Ende und die zweite Seitenfläche der Flanschdichtung 11 ist der Nutflanke des Spannringes angepaßt, da diese Seite direkt in der Nut des Spannringes anliegt. Zur Erhöhung der Dichtwirkung können in den Dichtflächen zusätzlich umlaufende Dichtungsfedern 16 angeformt sein.

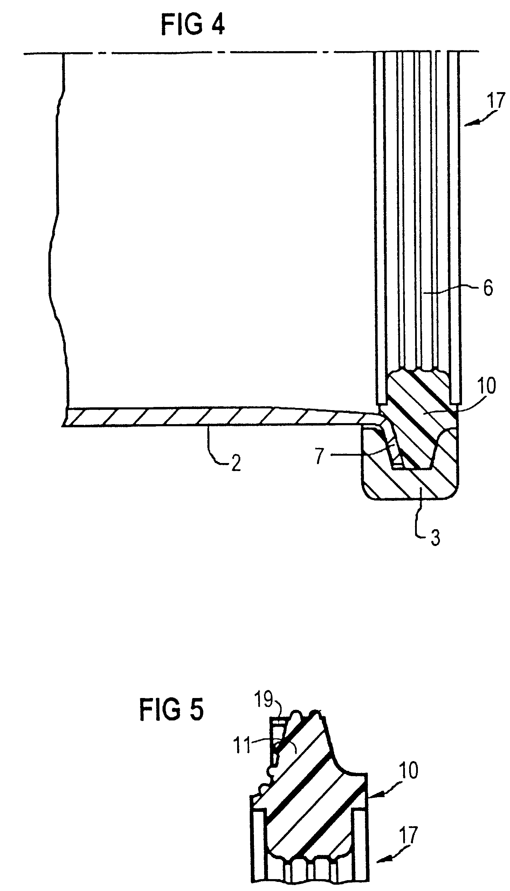

Figur 3 zeigt den Einsatz der ringförmigen Dichtung 10 in der Dichtungsnut 6 des an sich bekannten Dichtungskörpers 17. Die Dichtungsnut 6 kann unter Umständen wie angedeutet ist, auch mit Rillen 18 zur Aufnahme der Dichtungsfedern 16 der Dichtung 10 versehen werden, doch ist dies nicht zwingend nötig, wenn die Elastizität entsprechend abgestimmt ist.

In Figur 4 ist nun in einem Teilschnittbild die Zusammenwirkung der Einzelteile im Dichtungsbereich der Kabelmuffe ersichtlich. So wird deutlich, daß der umlaufende Flansch 7 des Umhüllungskörpers 2 und die Dichtung 10 in der Nut des Spannringes 3 dichtend zusammengepreßt werden, wobei die Montage gegenüber dem Stand der Technik erleichtert und die Sicherheit erhöht worden ist; denn die Abstimmung der Dichtung bezüglich der Form, Stabilität und Dichtigkeit ist hier optimal, so daß nur mehr ein Bauteil als Dichtung benötigt wird. Die Umsetzung der radialen Dichtung in eine axiale Dichtung erfolgt somit durch die erfindungsgemäße Dichtung 10.

Figur 5 zeigt die beschriebene Dichtung 10, die hier im Teil ihrer Flanschdichtung 11 zusätzlich mit einer umlaufenden Dichtlippe 19 versehen ist, um die Dichtwirkung gegenüber dem Flansch bei Bedarf erhöhen zu können.

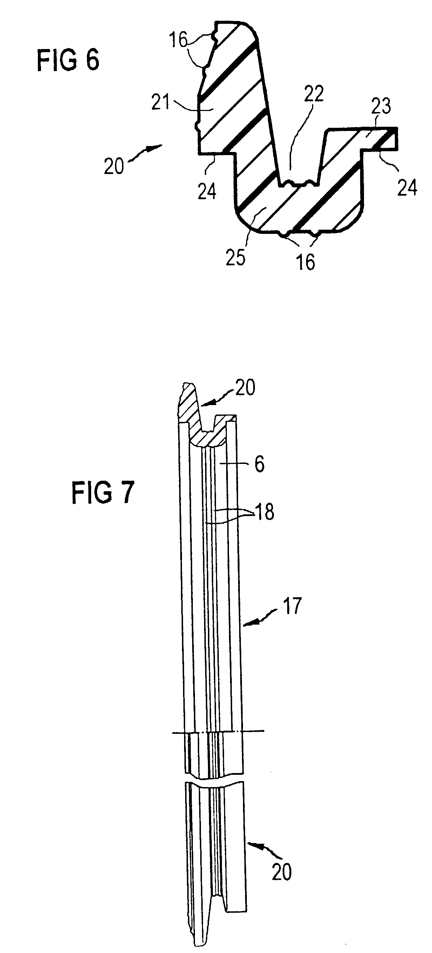

Figur 6 zeigt ein zweites Ausführungsbeispiel einer Dichtung 20 gemäß der Erfindung, mit der ebenfalls die Forderungen nach Dichtigkeit und Stabilität in der bereits beschriebenen Art erfüllt werden. Hier handelt es sich ebenfalls um eine einstückige Dichtung 20, die in der Grundform einen U-förmigen Querschnitt aufweist, wobei ein U-Schenkel als Flanschdichtung 21, der U-Grund mit dem zweiten U-Schenkel als Nutdichtung 25 ausgebildet sind Die Flanschdichtung 21 ist mit der dem Flansch zugekehrten Oberfläche wiederum der Flanschform des Umhüllungskörpers angepaßt, während die Nutdichtung 25 in ihren Konturen der Nutform des an sich bekannten Dichtungskörpers entspricht, so daß diesbezüglich die gleichen Verhältnisse gelten wie beim ersten Ausführungsbeispiel. Die umlaufenden angeformten Stützringe 23 mit ihren einwärts gerichteten Flächen 24 zur Abstützung der Dichtung 20 auf den Rändern der Dichtungsnut des Dichtungskörpers sind hier durch die entsprechenden Absätze gebildet bzw. nach auswärts abgewinkelt. In den Zwischenraum 22 der U-förmigen Dichtung 20 zwischen den beiden U-Schenkeln greift bei der Montage ein Nutrand des Spannringes ein und verleiht somit zusätzliche Festigkeit im Dichtungsbereich.

Figur 7 verdeutlicht nun den Einsatz der Dichtung 20 nach Figur 6 in der Dichtungsnut 6 des an sich bekannten Dichtungskörpers 17, wobei im oberen Teil ein Querschnitt und im unteren Teil die äußere Profilierung der Dichtung 20 dargestellt sind.

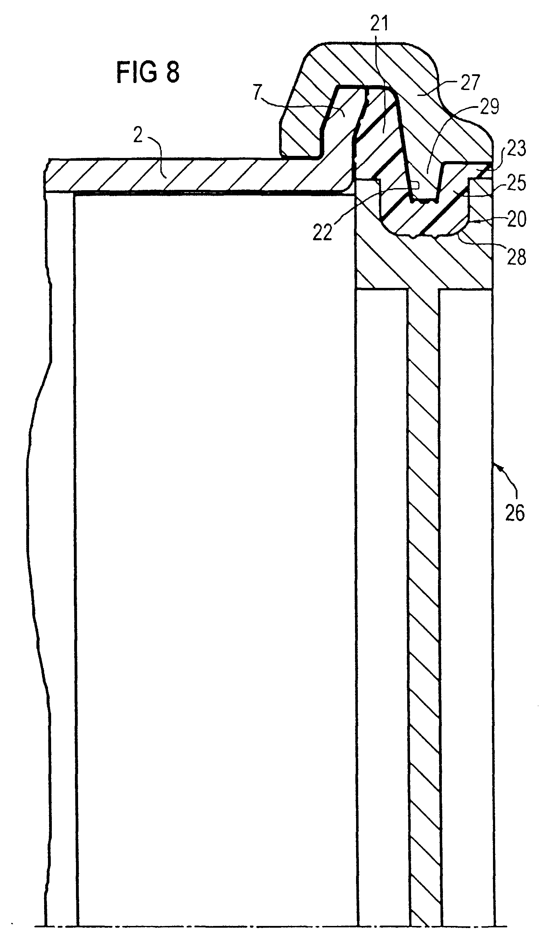

In Figur 8 ist die ringförmige Dichtung 20 im montierten Zustand im Dichtungsbereich der Kabelmuffe dargestellt. Hier wird deutlich, daß die Dichtung 20 in der Dichtungsnut 28 des Dichtungsskörpers 26 eingepreßt ist, wobei der angeformte Stützring 23 zwischen dem Rand der Dichtungsnut 28 und einer Ausformung des Spannringes 27 eingepreßt ist. Der Spannring 27 umfaßt mit einem Nutrand auf der einen Seite den Flansch 7 des Umhüllungskörpers 2 und taucht mit seinem zweiten Nutrand als Feder 29 in den Zwischenraum 22 zwischen den beiden U-förmigen Schenkeln der ringförmigen Dichtung 20 ein, verpreßt die Dichtung 20 und stellt den entsprechenden mechanischen Halt her. Das für diese Ausführungsform verwendete elastomere Material weist vorzugsweise eine Shore-Härte von 40° bis 60° auf.

## Patentansprüche

1. Kabelmuffe aus einem Umhüllungskörper und mindestens einem an sich bekannten Dichtungskörper mit umlaufender Dichtungsnut und einer ringförmigen Dichtung, wobei der Umhüllungskörper am Dichtungsende einen nach auswärts gerichteten umlaufenden und konisch abgeschrägten Flansch aufweist, der zusammen mit der Dichtung von einem Spannring, der eine einwärts gerichtete Nut mit konischen Flanken aufweist, umfaßt wird,
**dadurch gekennzeichnet,**
daß die ringförmige Dichtung (10, 20) aus einer die Dichtungsnut (6, 28) des Dichtungskörpers (17, 26) ausfüllenden Nutdichtung (12, 25) und einer in die Nut des Spannringes (3, 27) eintauchenden und der Flanke des Flansches (7) des Umhüllungskörpers (2) angepaßten Flanschdichtung (11, 21) besteht, daß zwischen der Nutdichtung (12, 25,) und der Flanschdichtung (11, 21) mindestens ein umlaufender Stützring (13a, 13b, 23) ausgebildet ist und daß die ringförmige Dichtung (10, 20) aus einem Elastomer mit einer Shore-Härte von 40° bis 70° besteht.

2. Kabelmuffe nach Anspruch 1,
**dadurch gekennzeichnet,**
daß umlaufende Dichtungsfedern (16) in den Dichtflächen der ringförmigen Dichtung (10, 20) angeordnet sind.

3. Kabelmuffe nach einem der vorhergehenden Ansprüche,
**dadurch gekennzeichnet,**
daß die gesamte Dichtung (10, 20) über umlaufende einwärts gerichtete Flächen (14, 24) ihrer Stützringe (13a, 13b, 23) auf den Umfangsflächen der Ränder des Dichtungskörpers (17, 26) abgestützt ist.

4. Kabelmuffe nach einem der vorhergehenden Ansprüche,
**dadurch gekennzeichnet,**
daß eine umlaufende Dichtungslippe (19) am außen liegenden Ende der gegen den Flansch (7) des Umhüllungskörpers (2) gerichteten Dichtungsfläche der Flanschdichtung (11) angeordnet ist.

5. Kabelmuffe nach einem der vorhergehenden Ansprüche,
**dadurch gekennzeichnet,**
daß die ringförmige Dichtung (20) U-förmigen Querschnitt aufweist, daß ein U-Schenkel als Flanschdichtung (21) ausgebildet ist und zusammen mit dem Flansch (7) des Umhüllungskörpers (2) in der Nut des Spannringes (27) angeordnet ist, daß der Grund der U-Form als Nutdichtung (25) in der umlaufenden Dichtungsnut (28) des Dichtungskörpers (26) eingesetzt ist, wobei der zweite U-Schenkel als Stützring (23) nach auswärts abgewinkelt ist, daß ein Nutrand des Spannringes (27) als Feder (29) verlängert ist und in den Zwischenraum (22) der U-förmigen Dichtung (20) eintaucht und daß die Feder (29) nach außen abgewinkelt ist und den Stützring (23) der Dichtung (20) auf die Umfangsfläche des Nutrandes der Dichtungsnut (28) des Dichtungskörpers (26) preßt.

## Claims

1. Cable sleeve composed of a sheathing body and at least one sealing body which is known per se and has a circumferential sealing groove and an annular seal, in which case the sheathing body has, at the seal end, a flange which is directed outwards, is circumferential, is conically inclined and, together with the seal, is surrounded by a clamping ring which has a groove that is directed inwards and has conical flanks, characterized in that the annular seal (10, 20) comprises a groove seal (12, 25) which fills the sealing groove (6, 28) in the sealing body (17, 26), and a flange seal (11, 21), which enters the groove in the clamping ring (3, 27) and is matched to the flank of the flange (7) of the sheathing body (2), in that at least one circumferential supporting ring (13a, 13b, 23) is formed between the groove seal (12, 25) and the flange seal (11, 21), and in that the annular seal (10, 20) is composed of an elastomer having a Shore hardness of 40° to 70°.

2. Cable sleeve according to Claim 1, characterized in that circumferential sealing springs (16) are arranged in the sealing surfaces of the annular seal (10, 20).

3. Cable sleeve according to one of the preceding claims, characterized in that the entire seal (10, 20) is supported via circumferential surfaces (14, 24) (which point inwards) of its supporting rings (13a, 13b, 23) on the circumferential surfaces of the edges of the sealing body (17, 26).

4. Cable sleeve according to one of the preceding claims, characterized in that a circumferential sealing lip (19) is arranged on that end which is located at the outside of that sealing surface of the flange seal (11) which is directed towards the flange (7) of the sheathing body (2).

5. Cable sleeve according to one of the preceding claims, characterized in that the annular seal (20) has a U-shaped cross section, in that one U-limb is in the form of a flange seal (21) and is arranged together with the flange (7) of the sheathing body (2) in the groove in the clamping ring (27), in that the base of the U-shape is inserted as a groove seal (25) in the circumferential sealing groove (28) in the sealing body (26), with the second U-limb being bent outwards as a supporting ring (23), in that one groove edge of the clamping ring (27) is lengthened as a spring (29) and enters the intermediate space (22) in the U-shaped seal (20), and in that the spring (29) is bent outwards and presses the supporting ring (23) of the seal (20) onto the circumferential surface of the groove edge of the sealing groove (28) in the sealing body (26).

## Revendications

1. Manchon de câble constitué d'un corps-enveloppe et, au moins, d'un corps d'étanchéité déjà connu avec une gorge d'étanchéité périphérique et un joint d'étanchéité annulaire, le corps-enveloppe comportant à son extrémité à fermer une bride périphérique tournée vers l'extérieur et biseautée en forme de cône, laquelle est enserrée, en même temps que le joint, par une bague de serrage, qui présente une gorge tournée vers l'intérieur et dont les flancs sont coniques,
**caractérisé par le fait**
que le joint d'étanchéité annulaire (10, 20) est composé d'un joint de gorge (12, 25), qui remplit la gorge d'étanchéité (6, 28) du corps d'étanchéité (17, 26), et d'une garniture d'étanchéité à bride (11, 21), ajustée au flanc de la bride (7) du corps de manchon ou enveloppe (2) et qui s'enfonce dans la gorge de la bague de serrage (3, 27), par le fait que, entre le joint de gorge (12, 25) et la garniture d'étanchéité à bride (11, 21), au moins une couronne d'appui périphérique (13a, 13b, 23) est prévue et par le fait que le joint d'étanchéité annulaire (10, 20) est composé d'un élastomère avec une dureté Shore de 40° à 70°.

2. Manchon de câble selon la revendication 1
**caractérisé par le fait**
que des joncs d'étanchéité périphériques (16) sont placés sur les surfaces d'étanchéité du joint d'étanchéité annulaire (10, 20).

3. Manchon de câble selon l'une des revendications précédentes
**caractérisé par le fait**
que l'ensemble du joint (10, 20) s'appuie, grâce à des surfaces périphériques (14, 24), tournées vers l'intérieur, de leurs couronnes d'appui (13a, 13b, 23) sur les surfaces périphériques des bords du corps d'étanchéité (17, 26).

4. Manchon de câble selon l'une des revendications précédentes
**caractérisé par le fait**
qu'une lèvre périphérique d'étanchéité (19) est disposée à l'extrémité extérieure de la surface d'étanchéité de la garniture d'étanchéité à bride (11) tournée contre la bride (7) du corps-enveloppe (2).

5. Manchon de câble selon l'une des revendications précédentes
**caractérisé par le fait**
que le joint d'étanchéité annulaire (20) a une section en forme de U, par le fait qu'une branche du U est conçue comme garniture d'étanchéité à bride (21) et est placée, en commun avec la bride (7) du corps-enveloppe (2) dans la gorge de la bague de serrage (27), par le fait que la base du U est engagée comme joint de gorge (25) dans la gorge périphérique d'étanchéité (28) du corps d'étanchéité (26), la deuxième branche du U étant coudée vers l'extérieur comme couronne d'appui (23), par le fait qu'un bord de la bague de serrage (27) est prolongé en tant que languette (29) et est enfoncé dans l'espace intermédiaire (22) du joint en forme de U (20) et par le fait que la languette (29) est coudée vers l'extérieur et comprime la couronne d'appui (23) du joint (20) sur la surface périphérique du bord de la gorge d'étanchéité (28) du corps d'étanchéité (26).
